# EUROPEAN PATENT SPECIFICATION

(11) **EP 1 970 296 B1**
(45) Date of publication and mention of the grant of the patent: **20.01.2010**
(21) Application number: 07104160.2
(22) Date of filing: 14.03.2007
(51) Int. Cl.: B62K 15/00

(54) **Foldable bicycle**
Faltbares Fahrrad
Bicyclette pliable

(43) Date of publication of application: 17.09.2008
(73) Proprietor: Lu, I Shyong, Taichung City 404 (TW)
(72) Inventor: Lu, I Shyong, Taichung City 404 (TW)
(74) Representative: Viering, Jentschura & Partner

(56) References cited:
- EP-A1- 0 058 526
- WO-A-87/01084
- DE-U1-202004 002 387
- GB-A- 2 387 147
- US-A1- 2001 004 150
- US-A1- 2005 151 345
- US-B1- 7 175 192

## Description

### 1. Technical Field

The invention relates to a foldable bicycle according to the preamble of claim 1.

### 2. Description of Related Art

A foldable bicycle of the initially-mentioned type is known, e.g., from GB-A-2 387 147.

A conventional art related to a folded bicycle principally implements a folding segment provided on the frame of the bicycle whereupon the front portion can be folded toward the back portion of the bicycle and the front and back wheels of the bicycle can be settled abreast to achieve the objective of reducing the amount of floor space taken by the bicycle and facilitating portability of the bicycle.

However, one problem with such a strategy is that when being folded, such conventional foldable bicycle typically stands on the chainwheel protector as a third supporting point in addition to the front and back wheels. This may consequently cause damage or deformation to the chainwheel protector. Also, the portability and mobility of the folded bicycle have never been perfect in practice.

To remedy foresaid problem, another conventional foldable bicycle is provided. This conventional foldable bicycle has a seat stem that can be plunged downward through the frame and stretching out from the bottom of a seat tube so that the seat stem can function as a third supporting point to support the folded bicycle in concert with the front and back wheels. Nevertheless, friction between the bottom of the seat stem and the ground can substantially cause a drag upon pushing or pulling the folded bicycle.

### SUMMARY OF THE INVENTION

It is one objective of the present invention to provide a foldable bicycle having at least one auxiliary wheel so as to provide at a third supporting point to the folded bicycle. To this end, the invention provides a foldable bicycle according to claim 1. Further embodiments of the invention are described in the dependent claims. When the bicycle is folded and carries a basket or rack, the auxiliary wheel can be landed or retracted optionally due to user's need. As the auxiliary wheel, which can be shifted up or down, is landed, the folded bicycle can work as a tri-wheel hand wagon or pull cart; while as the auxiliary wheel is retracted, the folded bicycle can work as a dual-wheel hand wagon or pull cart.

According to the present invention, the auxiliary wheel substitutes the chainwheel protector and folding segment to be the third supporting point of the folded bicycle. Thus, the chainwheel protector and folding segment can be prevented against attrition and the folded bicycle can be stably supported. As a result, the disclosed foldable bicycle can be easily operated, moved or carried by even a child or girl. Meantime, the disclosed foldable bicycle is a multi-functioned wheel cart facilitating conveying heavy articles.

According to the present invention the foldable bicycle may be folded in either a clockwise or anti-clockwise direction. When the bicycle is folded, the front and back wheels are settled or positioned almost abreast and the auxiliary wheel can work in concert with the front and back wheels to support the folded bicycle with supporting points that are arranged in a triangular form on the ground.

Thereby, the folded bicycle can stand stably or move steady under an external push or pull force.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
Figure 1 is a perspective view of a rack of the disclosed foldable bicycle;
Figure 2 is a perspective view of the disclosed foldable bicycle showing it expanded;
Figure 3 is a perspective view of the disclosed foldable bicycle showing it folded;
Figure 4 is a lateral view of the disclosed foldable bicycle showing the rack being equipped thereto;
Figure 5 is a lateral view of the disclosed foldable bicycle;
Figure 6 is an exploded view of the auxiliary wheel of the present invention;
Figure 7 is an applied view of the disclosed foldable bicycle showing the rack being appended onto the tail thereof; and
Figure 8 is an applied view of the disclosed foldable bicycle showing a basket being appended onto the tail thereof; and

### DETAILED DESCRIPTION OF THE PREFERRED EMBODIMENT

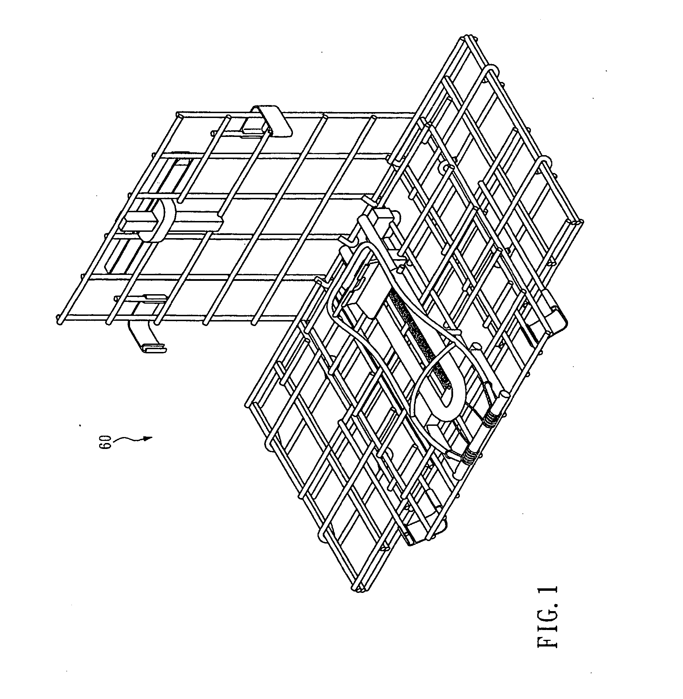

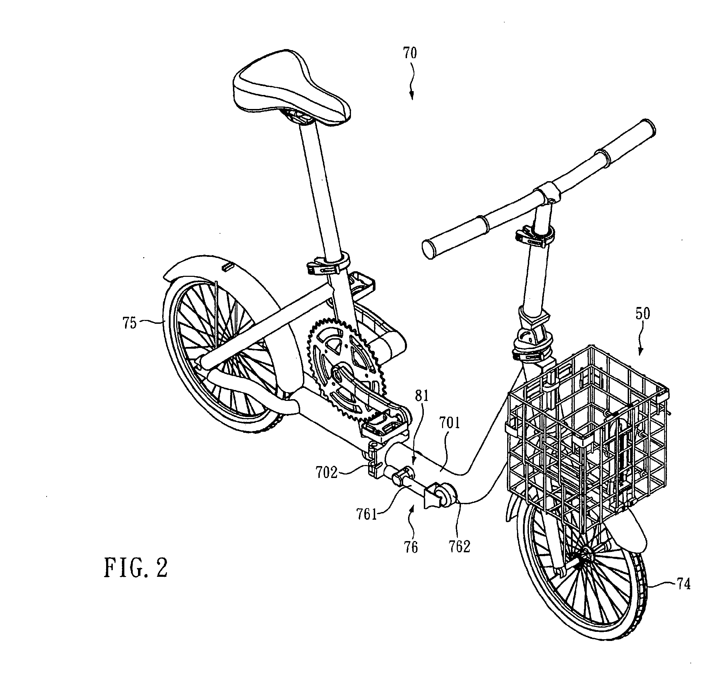

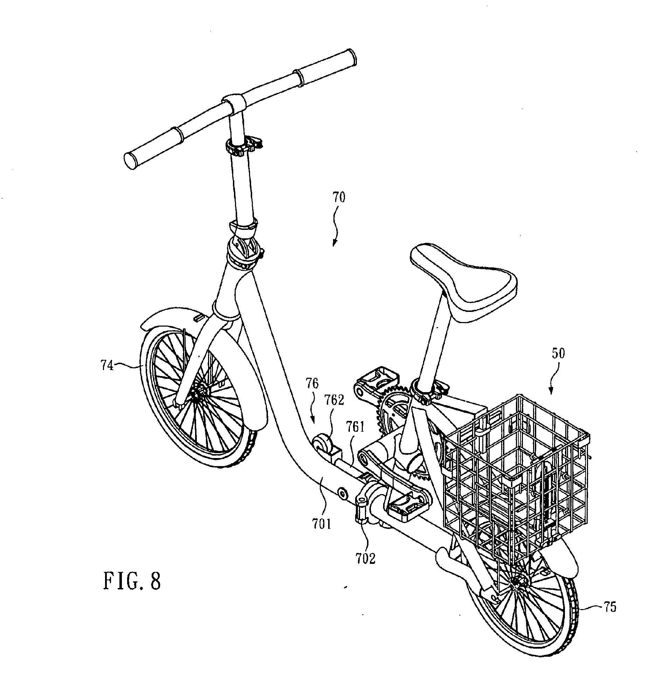

**Figure 1** is provided to illustrate a rack **60** that can be expanded into a basket form **50** as shown in following Figures (i.e. **Figures 2** **and** **8****).** As the rack **60** or basket **50** is merely a possible accessory of the disclosed foldable bicycle and not to be contained in the scope of the present invention, it will not be discussed in great detail herein.

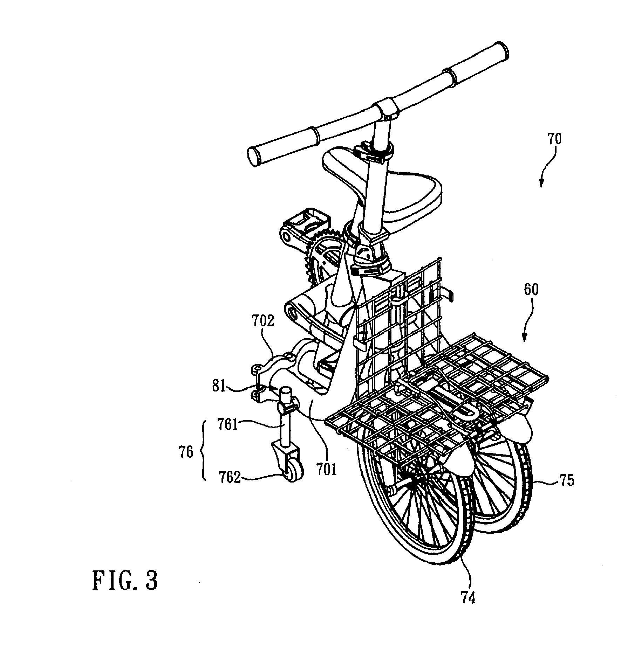

As shown in **Figure 2****,** a conventional foldable bicycle **70** comprises a folding segment **702** provided on the frame **701** thereof. Upon the folding segment **702,** the front portion of the foldable bicycle can be folded toward the back portion thereof and a front wheel **74** and a back wheel **75** of the bicycle **70** can be settled abreast as shown in **Figure3****.**

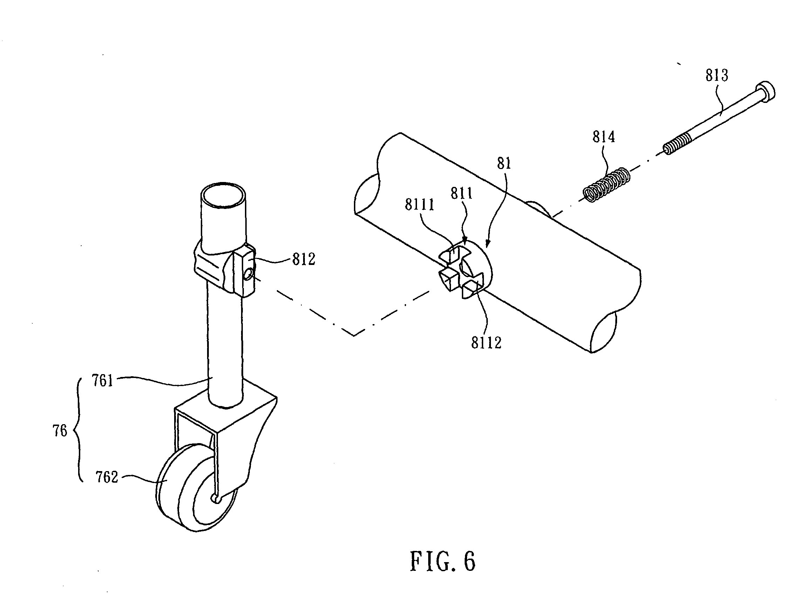

In **Figures 2** **and** **3****,** it can be seen that an auxiliary wheel **76** is deposited on the frame **701** in front of the folding segment **702.** The auxiliary wheel **76** may be situated at the left side, right side or bottom of the frame **701** and may be provided in the amount of one or more. The structure on the auxiliary wheel **76** can be referred to **Figure 6****.** It comprises a shaft **761** and a wheel **762** attached at the bottom of the shaft **761,** wherein the position of wheel **762** can be adjusted with respect to the shaft **761** to ensure that the wheel **762** can be substantively landed on the ground. The top of the shaft **761** is coupled to the frame **701** of the bicycle **70** by means of a pivot assembly **81.** Said pivot assembly **81** comprises a cross-shaped recess **811** and a protruding bar **812** which are provided on the frame **701** and shaft **761** respectively wherein the both components are fastened together by a fastening component **813** which is sheathed into an elastic component **814** and pivotally pierced therethrough. In virtue of the elastic component **814,** the shaft **761** can be slightly pulled outward to allow the cross-shaped recess **811** and protruding bar **812** getting separated so that the shaft **761** can be pivoted on the fastening component **813.** According to the present invention, when the protruding bar **812** is vertically engaged with the vertical groove **8111** of the cross-shaped recess **811,** the shaft **761** is positioned perpendicularly and the wheel **762** is landed on the ground. Alternatively, when the protruding bar **812** is transversely engaged with the horizontal groove **8112** of the cross-shaped recess **811,** the shaft **761** is positioned horizontally with respect to the frame **701** and the wheel **762** is departed from the ground.

When the disclosed bicycle **70** is folded, the user can set the auxiliary wheel **76** landed or retracted. When the auxiliary wheel **76** is landed, as shown in **Figures 3****,** **4** and **5****,** the folded bicycle can work as a tri-wheel hand wagon or pull cart. Whereas, when the auxiliary wheel **76** is retracted, the folded bicycle can work as a dual-wheel hand wagon or pull cart, as shown in **Figures 2****,** **7** and **8****.**

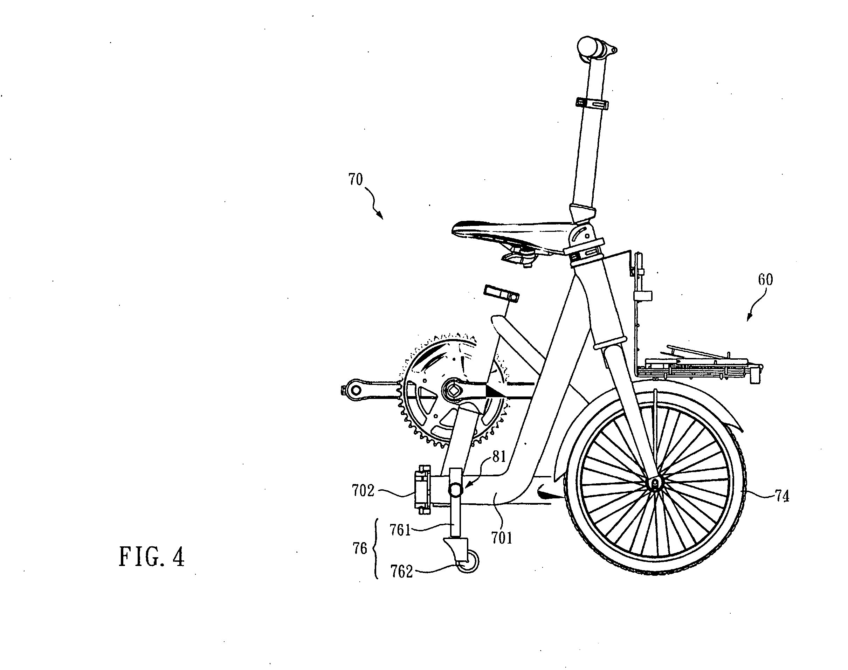

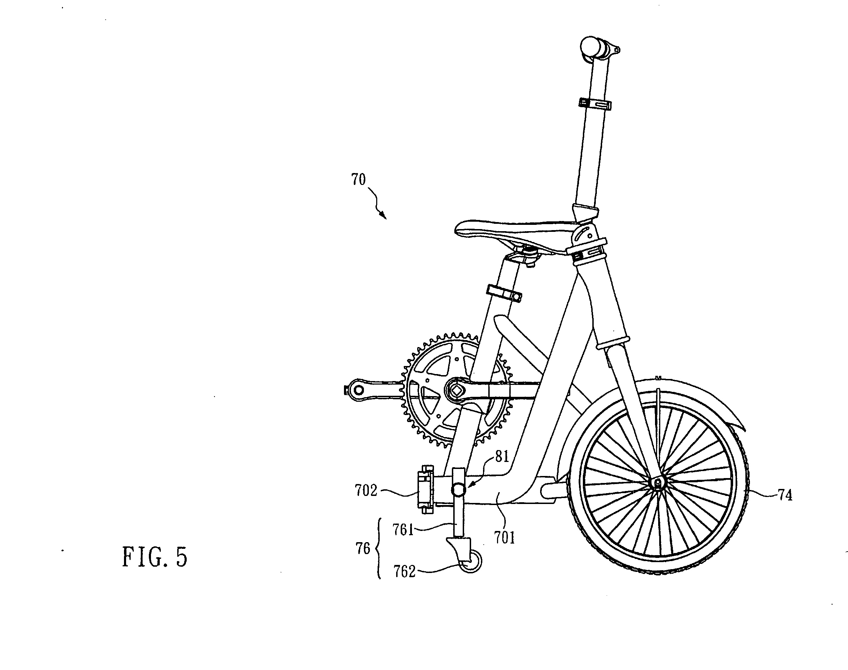

Additionally, in **Figure 4****,** the bicycle is now folded and with the auxiliary wheel **76** landed on the ground while the rack **60** is equipped thereto. **Figure 5** shows the bicycle alone, which, similar to **Figure 4****,** is folded and with the auxiliary wheel **76** landed on the ground.

Referring again to **Figures 3****,** **4** and **5****,** when the bicycle is folded and with the auxiliary wheel **76** landed on the ground, the auxiliary wheel **76** can function in concert with the front and back wheels **74, 75** as three supporting points that are arranged in a triangular form on the ground and provide optimum support to a tri-wheel pull cart. Therefore, the folded bicycle supported by the landed auxiliary wheel **76** can possess a constant center of gravity and desirable balance ability whereby the folded bicycle can stand stably or move steady under an external push or pull force.

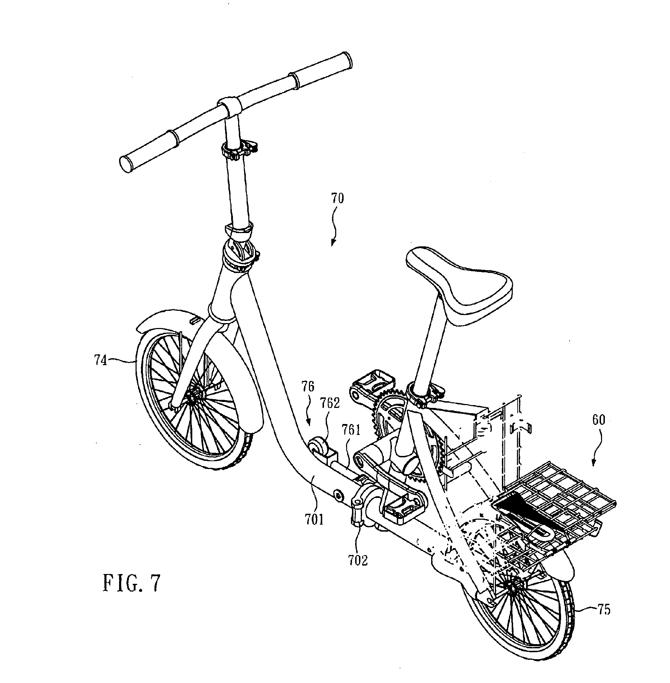

In **Figures 2****,** **7** and **8****,** the bicycle is expanded for a user's riding. According to **Figure 2****,** said rack **60** is expanded into the form of the basket **50** and deposited in front of the head of the bicycle. In **Figure 7****,** the basket **50** is folded into the rack **60** and deposited at the tail of the bicycle over the back wheel **75.** And in **Figure 8****,** it can be seen that the rack **60** is expanded into the form of the basket **50** and arranged at the tail of the bicycle over the back wheel **75.**

Although a particular embodiment of the invention has been described in detail for purposes of illustration, it will be understood by one of ordinary skill in the art that numerous variations will be possible to the disclosed embodiments without going outside the scope of the invention as disclosed in the claims.

## Claims

1. A foldable bicycle (70) that comprises a folding segment (702) provided on the frame (701) thereof, whereupon the bicycle (70) can be folded in the manner that a front wheel (74) is settled at the side of a back wheel (75) of the bicycle (70) and further comprises:
an auxiliary wheel (76) deposited on the frame (701) in front of the folding segment (702) so that when the bicycle (70) is folded, the auxiliary wheel (76), the front wheel (74) and back wheel (75) function as three supporting points that are arranged in a triangular form on a plane, **characterized in that** the auxiliary wheel (76) is deposited at the left side of the frame (701) or is deposited at the right side of the frame (701).

2. The foldable bicycle of Claim 1, wherein the auxiliary wheel (76) comprises a shaft (761) and a wheel (762) attached at the bottom of the shaft (761) wherein the top of the shaft (761) is coupled to the frame (701) of the bicycle (70) by means of a pivot assembly (81).

3. The foldable bicycle (70) of Claim 2, wherein the pivot assembly (81) comprises a cross-shaped recess (811) and a protruding bar (812) which are provided on the frame (701) and the top of the shaft (761) respectively, which are fastened together by a fastening component (813) and an elastic component (814) pivotally pierced therethrough.

4. The foldable bicycle (70) of Claim 3, wherein the position of wheel (762) can be adjusted with respect to the shaft (761).

## Patentansprüche

1. Klappfahrrad (70), das ein Klappsegment (702) aufweist, das an dem Rahmen (701) davon vorgesehen ist, wobei das Fahrrad (70) derart geklappt werden kann, dass ein Vorderrad (74) an der Seite eines Hinterrades (75) abgelegt ist, und ferner aufweist:
ein Hilfsrad (76), das an dem Rahmen (701) vor dem Klappsegment (702) gelagert ist, so dass, wenn das Fahrrad (70) zusammengeklappt ist, das Hilfsrad (76), das Vorderrad (74) und das Hinterrad (75) als drei Stützpunkte wirken, die in einer Dreiecksform auf einer Ebene angeordnet sind,
**dadurch gekennzeichnet, dass** das Hilfsrad (76) an der linken Seite des Rahmens (701) gelagert ist oder an der rechten Seite des Rahmens (701) gelagert ist.

2. Klappfahrrad nach Anspruch 1, wobei das Hilfsrad (76) einen Schaft (761) und ein Rad (762) aufweist, das an der Unterseite des Schaftes (761) angebracht ist, wobei die Oberseite des Schaftes (761) mittels einer Gelenkanordnung (81) mit dem Rahmen (701) des Fahrrades (70) gekuppelt ist.

3. Klappfahrrad (70) nach Anspruch 2, wobei die Gelenkanordnung (81) eine kreuzförmige Ausnehmung (811) und einen vorstehenden Barren (812) aufweist, welche an dem Rahmen (701) bzw. der Oberseite des Schaftes (761) vorgesehen sind, welche mittels eines Befestigungselements (813) und eines Federelements (814) aneinander befestigt sind, die drehbar durch diese hindurchdringen.

4. Klappfahrrad (70) nach Anspruch 3, wobei die Position des Rades (762) in Bezug auf den Schaft (761) verstellt werden kann.

## Revendications

1. Bicyclette pliable (70) qui comprend un segment pliant (702) en place sur son cadre (701), la bicyclette (70) pouvant être pliée de sorte qu'une roue avant (74) soit placée à côté d'une roue arrière (75) de la bicyclette (70) et comprenant en outre :
une roue auxiliaire (76) déposée sur le cadre (701) devant le segment pliant (702) de sorte que, lorsque la bicyclette (70) est pliée, la roue auxiliaire (76), la roue avant (74) et la roue arrière (75) constituent trois points de support qui sont disposés sous forme triangulaire dans un plan, **caractérisée en ce que** la roue auxiliaire (76) est déposée sur le côté gauche du cadre (701) ou est déposée sur le côté droit du cadre (701).

2. Bicyclette pliable selon la revendication 1, dans laquelle la roue auxiliaire (76) comprend un arbre (761) et une roue (762) fixée au fond de l'arbre (761), la partie supérieure de l'arbre (761) étant couplée au cadre (701) de la bicyclette (70) à l'aide d'un assemblage pivot (81).

3. Bicyclette pliable (70) selon la revendication 2, dans laquelle l'assemblage pivot (81) comprend un évidement en forme de croix (811) et une barre saillante (812) qui sont mis en oeuvre sur le cadre (701) et la partie supérieure de l'arbre (761), respectivement, qui sont fixés ensemble par un composant de fixation (813) et un composant élastique (814) enfilé par pivotement à travers celui-ci.

4. Bicyclette pliable (70) selon la revendication 3, dans laquelle la position de la roue (762) peut être ajustée par rapport à l'arbre (761).
